## Europäisches Patentamt

## European Patent Office

## Office européen des brevets

(11) Veröffentlichungsnummer: **0 261 375**

**B1**

(12) **EUROPÄISCHE PATENTSCHRIFT**

(45) Veröffentlichungstag der Patentschrift:
**23.08.89**

(21) Anmeldenummer: **87111714.9**

(22) Anmeldetag: **13.08.87**

(51) Int. Cl.⁴: **B 29 C 53/60,** B 29 C 53/80, B 29 C 69/00

(54) Verfahren zum Herstellen eines Faserverbund-Hohlträgers.

(30) Priorität: **09.09.86 DE 3630594**

(43) Veröffentlichungstag der Anmeldung:
**30.03.88 Patentblatt 88/13**

(45) Bekanntmachung des Hinweises auf die Patenterteilung:
**23.08.89 Patentblatt 89/34**

(84) Benannte Vertragsstaaten:
**AT DE GB IT SE**

(56) Entgegenhaltungen:
**EP-A-0 115 763**
**EP-A-0 145 810**
**EP-A-0 165 163**
**DE-A-3 335 912**
**US-A-4 512 836**

(73) Patentinhaber: **Messerschmitt- Bölkow- Blohm Gesellschaft mit beschränkter Haftung, Robert- Koch- Strasse, D-8012 Ottobrunn (DE)**

(72) Erfinder: **Oefner, Walter, Painkamerstrasse 22, D-8156 Otterfing (DE)**
Erfinder: **Nowak, Franz, Meulanstrasse 23, D-8028 Taufkirchen (DE)**

## Beschreibung

Die Erfindung bezieht sich auf ein Verfahren zum Herstellen eines Faserverbund-Hohlträgers nach dem Oberbegriff des Anspruchs 1.

Die Herstellung derartiger Faserverbund-Hohlträger mit einstückig angeformten, zumindest einseitig erweiterten Laschen erfolgt üblicherweise im Wege des Trocken-Laminierverfahrens mit Hilfe sogenannter Prepregs, also Fasergeweben, die mit der Harzmatrix vorgetränkt sind und jeweils entsprechend zugeschnitten viellagig übereinandergeschichtet und dann ausgehärtet werden. Neben dem relativ hohen Fertigungs und Kostenaufwand stellt sich bei einem solchen Herstellungsverfahren das Problem, daß die Prepreggewebe, bedingt durch den geschlossenen Hohlträgerquerschnitt, örtlich unter entsprechender Aufdickung des Faserverbundlaminates überlappt werden müssen, was zur Folge hat, daß sich der Hohlträger einschließlich der Laschen nicht mit einer durchgehend homogenen Faserstruktur ausbilden läßt.

Bekannt ist ferner, Faserverbund-Hohlträger in einem kontinuierlichen Wickelvorgang mit Hilfe eines relativ zu einem umlaufenden Wickeldorn hin- und hergehenden Fadenauges herzustellen, durch das der harzgetränkte Verstärkungsfaden nach einem sich für jede Faserrichtung viellagig wiederholenden Wickelmuster auf dem Wickeldorn abgelegt wird. An den so gewickelten Hohlträger werden dann die gesondert aus Laminat gefertigten, erweiterten Laschenteile angeschäftet. Auch hier wieder sind die Faserlagen im Bereich der Schäftung unterbrochen, so daß der Hohlträger einschließlich der Laschen keine durchgehend homogene Faserstruktur und gleichmäßige Materialfestigkeit und -steifigkeit besitzt.

Aufgabe der Erfindung ist es, ein Verfahren der beanspruchten Art zu schaffen, durch das sich der im Querschnitt geschlossene Hohlträger einschließlich der erweiterten Lasche auf einfache Weise mit einer durchgehenden homogenen Faserstruktur herstellen läßt.

Diese Aufgabe wird erfindungsgemäß durch das im Patentanspruch 1 gekennzeichnet Verfahren gelöst.

Erfindungsgemäß wird ein geschlossener, über die gesamte Hohlträgerlänge einschließlich der Laschen gleichmäßig fortlaufender Faserlagenaufbau auf fertigungstechnisch einfache Weise erzielt, mit der Besonderheit, daß selbst bei größeren Laminat-Wandstärken durch das Hochklappen in Kombination mit der beanspruchten Wickeltechnik keine störenden Faser-Desorientierungen im hochgeklappten, seitlich erweiterten Laschenbereich verbleiben: aufgrund der gegenseitig punktförmigen, zumeist durch die Faser-Vorimprägnierung mit der Harzmatrix bewirkten Faserbindung an den Kreuzungsstellen zwischen benachbarten Einzelfadenlagen bleibt nämlich die Faserlagenstruktur beim Hochklappen in dem kritischen, durch die Schnittlinien abgegrenzten Laschenbereich erhalten und dennoch können sich die Einzelfäden in diesem Laminatabschnitt in Fadenlängsrichtung so ungehindert verschieben, daß Schlaufenbildungen oder andere Faser-Desorientierungen im kritischen Klappbereich unter der Wirkung der Faden-Eigensteifigkeit ausgeglichen werden, wenn nur der Werkzeugdurck zu Beginn der anschließenden Warmhärtung, also wenn die Harzmatrix in den dünnflüssigen Zustand gelangt, ausreichend langsam gesteigert wird.

In weiterer vorteilhafter Ausgestaltung der Erfindung werden die Laschen gemäß den Ansprüchen 2 und 3 am Ende eines im Querschnitt polygonalen, vorzugsweise viereckigen Hohlträgers jeweils einstückig an einer Hohlträger-Seitenwand derart ausgebildet, daß sie über die Seitenwandbreite erweitert sind und die Laschenerweiterungen jeweils aus der an die Seitenwand angrenzenden Nachbarwand abgetrennt und um deren gerade Verbindungslinie zur Seitenwand in die Seitenwand-Ebene hochgeklappt werden.

Gemäß Anspruch 4 wird der Wickelkörper im Hinblick auf einen günstigen Faserlagenaufbau und eine hohe Torsionssteifigkeit des Hohlträgers vorzugsweise mit einer sich unter $\pm 45°$ kreuzenden Faserorientierung gewickelt, wobei gemäß den Ansprüchen 5 und 6 zweckmäßigerweise zusätzliche, unidirektionale, in den laschenseitigen Wandbereichen des Hohlträgers verstärkte Fasereinlagen vorgesehen sind, um dem Hohlträger einschließlich der Laschen, vor allem auch im Bereich ihrer gegenseitigen Verbindung, eine hohe Festigkeit in Träger-Längsrichtung zu verleihen.

Zwar ist es ohne weiteres möglich, die Verstärkungsfäden erst nach Beendigung des Wickelvorganges und sogar erst nach dem Hochklappen der Laschenerweiterung mit der Harzmatrix zu imprägnieren, wobei dann allerdings ein geeignetes Bindemittel anstelle der Harzmatrix zur gegenseitigen Faserfixierung der Wickelstruktur bei gleichzeitig guter Längsverschieblichkeit der Verstärkungsfäden während der Warmhärtphase benötigt wird, aus Gründen einer verfahrenstechnischen Vereinfachung wird der Verstärkungsfaden gemäß Anspruch 7 vorzugsweise jedoch vor dem Aufwickeln auf den Wickeldorn mit der Harzmatrix vorgetränkt.

Falls der Wickeldorn im ausgehärteten Hohlträger verbleiben soll, wird gemäß Anspruch 8 zweckmäßigerweise als Wickeldorn ein Füll-, insbesondere Schaumstoffkern verwendet. Im allgemeinen empfiehlt es sich jedoch, einen metallischen, vorzugsweise mehrteiligen Wickeldorn zu benutzen, auf dem der Wickelkörper unter äußerer Druckeinwirkung ausgehärtet wird, woraufhin der Wickeldorn aus dem Wickelkörper entfernt und die Hohlträger-Enden gewünschtenfalls mit einem Füll-, etwa einem Schaumstoffeinsatz verschlossen werden können.

Die Erfindung wird anhand eines Ausführungsbeispieles in Verbindung mit den Zeichnungen näher erläutert.

Es zeigen in schematischer, perspektivischer Darstellung:

Fig. 1 eine Wickelvorrichtung zur Herstellung eines im Querschnitt viereckigen Wickelkörpers,

Fig. 2 den Wickelkörper mit endseitigen, die Laschenerweiterungen abgrenzenden Einschnitten;

Fig. 3 den Wickelkörper nach dem Hochklappen der durch die Einschnitte abgegrenzten Wandabschnitte; und

Fig. 4 den fertig ausgehärteten und zugeschnittenen Faserverbund-Hohlträger mit einstückig angeformten, erweiterten Laschen.

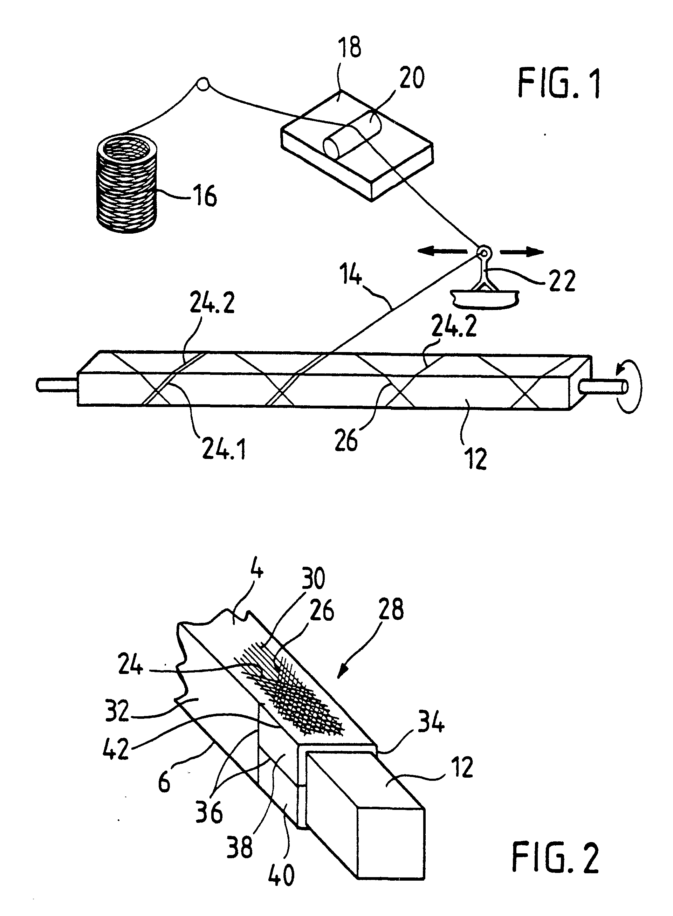

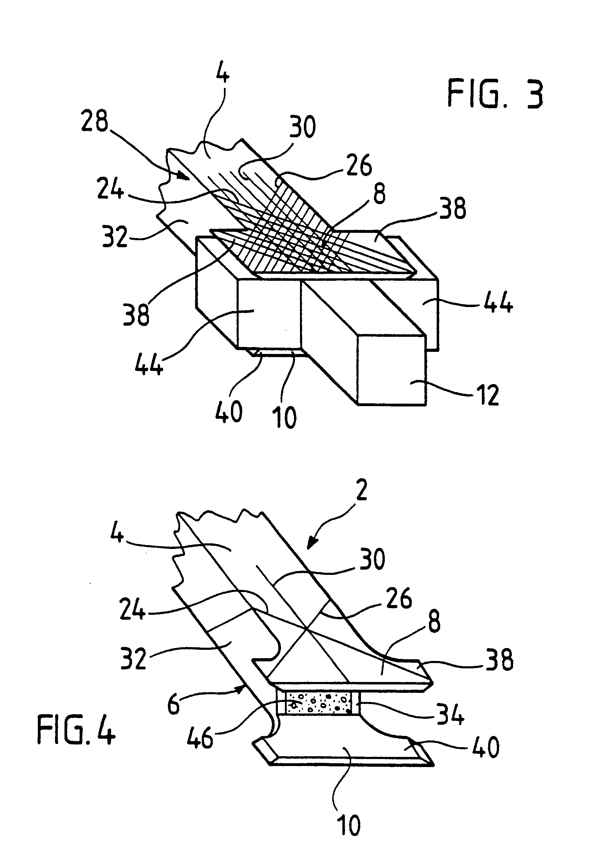

Zur Herstellung eines - in Fig. 4 gezeigten - Faserverbund-Hohlträgers 2, der einen in Umfangsrichtung geschlossenen Rechteck-Querschnitt aufweist und endseitig an zwei sich gegenüberliegenden Seitenwänden 4, 6 jeweils mit einer einstückig angeformten, seitlich über die Seitenwandbreite hinaus symmetrisch erweiterten Lasche 8 bzw. 10 versehen ist, wird gemäß Fig. 1 ein metallischer, vorzugsweise in der Mitte geteilter, in Pfeilrichtung umlaufender Wickeldorn 12 mit einem dem Innenquerschnitt des Hohlträgers 2 entsprechenden Vierkantquerschnitt auf einer dem Hohlträger 2 einschließlich der Laschen 8, 10 entsprechenden Länge kontinuierlich mit einem Verstärkungsfaden 14, etwa einem Glasfaserfaden, bewickelt, der von einer Garnrolle 16 abgezogen und in einer Tränkwanne 18 mit zugehöriger Tränkrolle 20 mit der Harzmatrix des Faserverbundwerkstoffes vorgetränkt wird, bevor er mit Hilfe eines achsparallel zum Wickeldorn 12 hin- und herlaufenden Fadenauges 22 mit gleichmäßiger Zugspannung auf dem Wickeldorn 12 abgelegt wird.

Der Steigungswinkel des Vestärkungsfadens 14 auf dem Wickeldorn 12, d. h. die Faserrichtung, wird durch das Verhältnis von Drehzahl des Wickeldorns 12 zur Vor- bzw. Rücklaufgeschwindigkeit des Fadenauges 22 festgelegt. Fig. 1 zeigt den Wickeldorn 12 beim Ablegen der dritten Faserlage 24. 1, die die gleiche Faserrichtung wie die erste Faserlage 24. 2, nämlich einen Steigungswinkel von +45° bezüglich der Wickeldorn-Längsrichtung aufweist, während die dazwischenliegende Einzelfaserlage 26 eine Faserrichtung von -45° besitzt. Auf diese Weise entsteht nach einem sich wiederholenden Wickelmuster ein sich kreuzender Faserlagenaufbau und für jede Faserrichtung eine Vielzahl von Einzelfadenlagen, zwischen denen sich jeweils eine Fadenlage mit einer anderen Faserrichtung befindet, bis der Wickeldorn 12 dicht bewickelt und ein vorgegebenes Faser-Flächengewicht, also die gewünschte Laminat-Wandstärke erreicht ist.

Fig. 2 zeigt den Laminat-Wickelkörper 28 nach Beendigung des Wickelvorganges, wobei zusätzlich zu den und zwischen die ± 45°-Faserlagen 24, 26 auch unidirektional über die gesamte Wickelkörper-Länge verlaufende Faserlagen 30 gewickelt und zur Verstärkung der laschenbildenden Endabschnitte des Wickelkörpers 28 weitere (nicht gezeigte) unidirektionale Fasereinlagen in das Wickellaminat eingefügt sein können. Das Wickellaminat wird nun vom Wickelkörperende aus an den an die Seitenwände 4, 6 angrenzenden Nachbarwänden 32 und 34 jeweils T-förmig längs einer in Wickelkörper-Längsrichtung entsprechend der Laschenlänge und sich hierzu senkrecht bis zu den Seitenwänden 4, 6 erstrekkenden Schnittlinie 36 durchtrennt, woraufhin die durch die Schnittlinie 36 abgegrenzten Nachbar-Wandabschnitte 38 bzw. 40 um die gerade Verbindungslinie 42 zwischen Nachbarwand 32 bzw. 34 und zugehöriger Seitenwand 4 bzw. 6 in die Seitenwand-Ebene umgeklappt und in dieser Lage durch metallische, bündig an den Dorn 12 angefügte Einsatzstücke 44 gehalten werden (Fig. 3).

Trotzdem die außenliegenden Faserlagen des Wickelkörpers 28 eine größere Umfangslänge als die innenliegenden haben, verbleiben an den Klapp- oder Verbindungslinien 42 keine störenden Faser-Desorientierungen, sondern vielmehr werden die unterschiedlichen Umfangslängen durch gegenseitige Verschiebung der einzelnen Faserlagen während des nachfolgenden Härtungszyklus unter der Wirkung der Faden-Eigensteifigkeit ausgeglichen, wenn nur zu Beginn der Warmhärtphase, also wenn die Harzmatrix in den dünnflüssigen Zustand gelangt, der Druck des Presswerkzeuges, in den der Wickelkörper 28 zusammen mit dem Wickeldorn 12 und den Einsatzstücken 44 eingelegt wird, ausreichend langsam gesteigert wird. Die zum Längenausgleich erforderliche Verschiebung der Einzellagen ist in Fig. 3 und 4 durch den schrägen Verlauf der Seitenkanten der Laschenerweiterungen 38 bzw. 40 angedeutet.

Nach dem Aushärten des Wickellaminates werden die Einsatzstücke 44 und der Wickeldorn 12 entfernt, und der Hohlträger 2 wird gemäß Fig. 4 an den Enden durch Schaumstoffeinsätze 46 verschlossen und etwa zur Erzielung gerundeter Übergänge zu den Laschenerweiterungen fertigbearbeitet.

## Patentansprüche

1. Verfahren zum Herstellen eines Faserverbund-Hohlträgers (2), der eine sich kreuzende, zur Tragerlängsrichtung schräg geneigte Faserorientierung besitzt und mit mindestens einer einstückig mit fortlaufender Faserstruktur angeformten, zumindest einseitig nach außen über den Hohlträger-Querschnitt vorstehend erweiterten Lasche (8, 10) versehen ist, dadurch gekennzeichnet, daß im Wege des Wickelverfahrens ein Laminat-Wickelkörper (28) mit einer dem Hohlträger einschließlich der Lasche (8, 10) entsprechenden Länge nach einem sich für die einzelnen Faserrichtungen jeweils viellagig wiederholenden Wickelmuster auf einen dem Träger-Innenquerschnitt entsprechenden Wickeldorn (13) gewickelt und längs einer nach Maßgabe der Laschenerweiterung verlaufenden Schnittlinie (36) durchtrennt wird, und dann der durch die Schnittlinie abgegrenzte Wandabschnitt des Wickelkörpers (28) hochgeklappt und der Wickelkörper einschließlich des hochgeklappten, die Laschenerweiterung bildenden Wandabschnittes (38, 40) gehärtet wird.

2. Verfahren nach Anspruch 1 zum Herstellen eines im Querschnitt polygonalen Faserverbund-Hohlträgers mit mindestens einer endseitig an einer Seitenwand einstückig angeformten, zumindest einseitig über die Breite der Seitenwand erweiterten Lasche,
dadurch gekennzeichnet, daß
die auf Seiten der Laschenerweiterung an die Seitenwand anschließende(n) Nachbarwand bzw. -wände des Wickelkörpers auf dem Wickeldorn längs einer nach Maßgabe der Laschenerweiterung bis zur Seitenwand verlaufenden Schnittlinie durchtrennt und der durch die Schnittlinie abgegrenzte Nachbarwandabschnitt aus der Nachbarwand-Ebene um deren Verbindungslinie zur Seitenwand hochgeklappt wird.

3. Verfahren nach Anspruch 2 zum Herstellen eines im Querschnitt viereckigen Faserverbund-Hohlträgers mit endseitig an zwei sich gegenüberliegenden Seitenwänden angeformten, beidseitig jeweils um weniger als die Breite der dazwischenliegenden Nachbarwand erweiterten Laschen,
dadurch gekennzeichnet, daß
die Nachbarwände vom Wickelkörperende aus jeweils T-förmig längs einer in Wickelkörper Längsrichtung entsprechend der Laschenlänge und hierzu senkrecht sich bis zu den beiden Seitenwänden erstreckenden Schnittlinie durchtrennt werden.

4. Verfahren nach einem der vorhergehenden Ansprüche,
dadurch gekennzeichnet, daß
der Wickelkörper mit Faserrichtungen von ± - 45° bezüglich der Wickeldorn-Längsrichtung gewickelt wird.

5. Verfahren nach einem der vorhergehenden Ansprüche,
dadurch gekennzeichnet, daß
der Wickelkörper zusätzlich zu der sich kreuzenden Faserorientierung mit unidirektional in Längsrichtung verlaufenden Faserlagen gewickelt wird.

6. Verfahren nach Anspruch 5,
dadurch gekennzeichnet, daß
die unidirektionalen Faserlagen in den laschenseitigen Wandbereichen des Wickelkörpers durch weitere unidirektionale Faserlagen örtlich verstärkt werden.

7. Verfahren nach einem der vorhergehenden Ansprüche,
dadurch gekennzeichnet, daß
der bzw. die Verstärkungsfäden vor dem Aufwickeln auf den Wickeldorn mit der Harzmatrix des Faserverbundwerkstoffes vorgetränkt werden.

8. Verfahren nach einem der vorhergehenden Ansprüche,
dadurch gekennzeichnet, daß
als Wickeldorn ein bleibender Füll-, insbesondere Schaumstoffkern verwendet wird.

9. Verfahren nach einem der Ansprüche 1 - 7,
dadurch gekennzeichnet, daß der Wickeldorn nach dem Aushärten des Wickelkörpers entfernt und dieser zumindest im Endbereich des Hohlträgers durch einen Füll-, insbesondere Schaumstoffeinsatz verschlossen wird.

**Claims**

1. A method for producing a composite fibre hollow girder (2) which possesses an intersecting fibre orientation inclined obliquely with regard to the longitudinal direction of the girder and is provided with at least one cover plate (8, 10) which is integrally formed in one piece with a continuous fibre structure and which is widened so as to protrude at least at one side outwardly beyond the cross-section of the hollow girder, characterised in that in the course of the winding process a laminate wound body (28) having a length corresponding to the hollow girder including the cover plate (8, 10) is wound in accordance with a winding pattern repeating itself respectively in multilayer manner for the individual fibre directions onto a winding mandrel (13) corresponding to the internal cross-section of the girder and is divided along a cutting line (36) extending in accordance with the cover plate widening, and then the wall portion, defined by the cutting line, of the wound body (28) is folded up and the wound body including the folded-up wall portion (38, 40) forming the cover plate widening is hardened.

2. A method according to claim 1 for producing a composite fibre hollow girder polygonal in cross-section and having at least one cover plate integrally formed in one piece at the end side on a side wall and widened at least at one side beyond the width of the side wall, characterised in that the neighbouring wall or walls, adjacent on the side of the cover plate widening to the side wall, of the wound body on the winding mandrel is or are divided along a cutting line extending in accordance with the cover plate widening as far as the side wall and the neighbouring wall portion defined by the cutting line is folded up out of the neighbouring wall plane about the connecting line with regard to the side wall.

3. A method according to claim 2 for producing a composite fibre hollow girder square in cross-section and having cover plates integrally formed at the end side on two mutually opposite side walls and widened at both sides respectively by less than the width of the neighbouring wall lying therebetween, characterised in that the neighbouring walls are divided from the wound body end respectively in a T-shaped manner along a cutting line extending in the longitudinal direction of the wound body in accordance with the cover plate length and perpendicularly hereto as far as the two side walls.

4. A method according to one of the preceding claims, characterised in that the wound body is wound with fibre directions of +/- 45° with respect to the longitudinal direction of the winding mandrel.

5. A method according to one of the preceding claims, characterised in that the wound body, in additon to the intersecting fibre orientation, is wound with fibre layers extending unidirectionally in the longitudinal direction.

6. A method according to claim 5, characterised in that the unidirectional fibre layers in the cover plate sided wall regions of the wound body are locally reinforced by further unidirectional fibre layers.

7. A method according to one of the preceding claims, characterised in that the reinforcing thread or threads, are pre-impregnated with the resin matrix of the composite fibre material prior to winding onto the winding mandrel.

8. A method according to one of the preceding claims, characterised in that a permanent filling material, more especially foam material, core is used as the winding mandrel.

9. A method according to one of claims 1 to 7, characterised in that the winding mandrel is removed after the hardening of the wound body and this is closed at least in the end region of the hollow girder by a filling material, more especially foam material, insert.

## Revendications

1. Procédé de fabrication d'une poutre creuse (2) liée par fibres, qui présente des fibres orientées de telle manière qu'elles se croisent et sont inclinées en biais par rapport à la direction longitudinale de la poutre, et qui est pourvue d'au moins un couvre-joint (8, 10) formé d'une seule pièce avec structure fibreuse continue, s'évasant en saillie vers l'extérieur au-delà de la section transversale de la poutre creuse, au moins d'un côté, caractérisé en ce que, au cours de l'opération d'enroulement, un corps bobiné stratifié (28) est formé, avec une longueur correspondant à la poutre creuse y compris le couvre-joint (8, 10), par enroulement sur une broche de bobinage (12) correspondant à la section transversale intérieure de la poutre, selon un modèle d'enroulement se répétant à chaque fois en plusieurs couches pour les directions individuelles de fibres, et est scindé le long d'une ligne de coupe (36) se développant conformément à l'évasement des couvre-joints, et ensuite la tranche de paroi du corps bobiné (28) délimitée par la ligne de coupe est rabattue et le corps bobiné y compris la tranche de paroi (38, 40) rabattue formant l'évasement des couvre-joints est durci.

2. Procédé selon la revendication 1 pour la fabrication d'une poutre creuse liée par fibres de section transversale polygonale, avec au moins un couvre-joint formé d'une seule pièce sur une face latérale, côté extrémité, et s'évasant au moins d'un côté au-delà de la largeur de la face latérale, caractérisé en ce que la ou les face(s) voisine(s) du corps bobiné se raccordant à la face latérale du côté de l'évasement des couvre-joints est (sont) scindée(s) sur la broche de bobinage le long d'une ligne de coupe se développant suivant l'évasement des couvre-joints jusqu'à la face latérale et la tranche de paroi voisine délimitée par la ligne de coupe est rabattue à partir du plan de la face voisine sur la face latérale par rotation autour de leur ligne de liaison.

3. Procédé selon la revendication 2 pour la fabrication d'une poutre creuse liée par fibres de section transversale carrée avec, du côté extrémité, des couvre-joints formés sur deux faces latérales se faisant face, s'évasant des deux côtés à chaque fois de moins que la largeur de la face voisine intermédiaire, caractérisé en ce que les faces voisines sont scindées à partir de l'extrémité du corps bobiné, à chaque fois en forme de T, suivant une ligne de coupe se développant dans la direction longitudinale du corps bobiné sur une longueur correspondant à celle des couvre-joints et perpendiculairement à cette direction jusqu'aux deux faces latérales.

4. Procédé selon l'une des revendications précédentes, caractérisé en ce que le corps bobiné est enroulé avec des directions de fibres de $\pm 45°$ par rapport au sens longitudinal du corps bobiné.

5. Procédé selon l'une des revendications précédentes, caractérisé en ce que le corps bobiné est formé par enroulement de couches de fibres se développant unidirectionnellement dans le sens longitudinal, en plus des fibres orientées de manière à se croiser.

6. Procédé selon la revendication 5, caractérisé en ce que les couches de fibres unidirectionnelles sont renforcées localement, dans les zones de paroi côté couvre-joint du corps bobiné, par d'autres couches de fibres unidirectionnelles.

7. Procédé selon l'une des revendications précédentes, caractérisé en ce que le ou les fil(s) de renforcement est (sont) imprégné(s) au préalable, avant l'enroulement sur la broche de bobinage, avec la matrice de résine du produit lié par fibres.

8. Procédé selon l'une des revendications précédentes, caractérisé en que l'on utilise, en tant que broche de bobinage, un noyau permanent d'un produit de remplissage, en particulier un produit en mousse.

9. Procédé selon l'une des revendications 1 à 7, caractérisé en ce que la broche de bobinage est enlevée après le durcissement du corps bobiné et ce dernier est bouché, au moins dans la zone d'extrémtité de la poutre creuse, par introduction d'une charge de remplissage, en particulier d'un produit en mousse.

FIG. 1

FIG. 2

FIG. 3

FIG. 4